# EUROPEAN PATENT APPLICATION

(11) **EP 2 733 330 A2**
(43) Date of publication of application: **21.05.2014**
(21) Application number: 13188324.1
(22) Date of filing: 11.10.2013
(51) Int. Cl.: F02C 7/24

(54) **A heat protection assembly**

(30) Priority: 20.11.2012 GB 201220805
(71) Applicant: Rolls-Royce plc, London SW1E 6AT (GB)
(72) Inventor: Emery, Martin, Bristol, South Gloucestershire BS34 8QW (GB); Groom, Alec, Bristol, South Gloucestershire BS5 7SE (GB)
(74) Representative: Hill, Matthew Ross

(57) **Abstract**

A flexible component 100 comprises a core element 110 provided with a heat protection assembly 140. The heat protection assembly comprises an intumescent coil wrap 120 that extends around the core element 110. The coil wrap 120 is arranged such that it is interlaced with a coil-shaped gap 150. This arrangements allows the component 100 to retain flexibility, whilst still ensuring an adequate level of heat protection to the core element 110.

## Description

The present disclosure relates to a heat protection assembly and particularly but not exclusively relates to a heat protection assembly for components of a gas turbine engine.

In a gas turbine engine it is desirable to protect various components from excessive heat, eg in the event of an engine fire. This is particularly the case for a jet engine. For example, it may be critical that certain electronic, hydraulic or any other functions are preserved if only for a certain period of time.

Furthermore, gas turbine engines may comprise various flexible components, eg wires, hoses, harnesses, flexible printed circuit boards, pipes etc, which may, for example, conveniently conform to a particular shape within the engine. Such flexible components may require protection in the event of an engine fire.

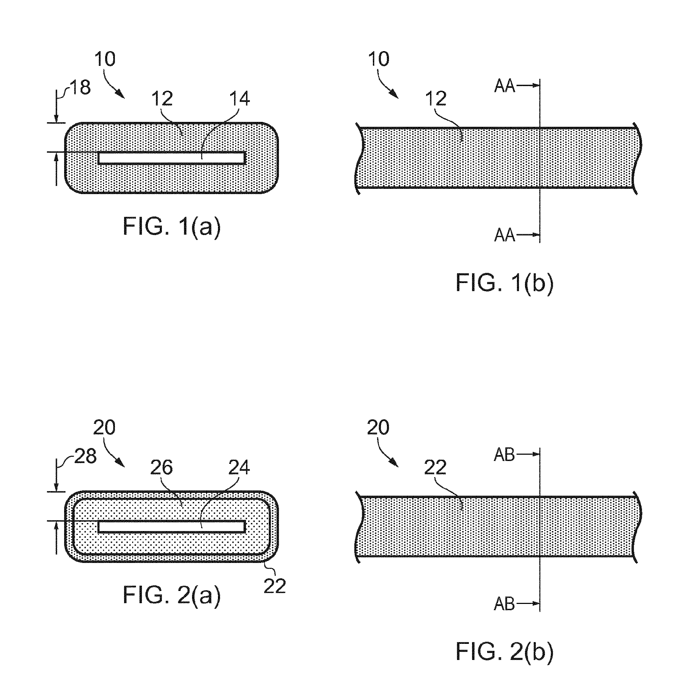

Presently, there are two previously-proposed fire protection systems for flexible printed circuit boards. As shown in Figures 1(a) and 1(b), the first of these systems 10 comprises a homogenous, solid layer 12 of a material such as silicone rubber, which encapsulates a component 14. By contrast, as shown in Figures 2(a) and 2(b), the second of the previously-proposed fire protection systems 20 comprises an inner layer 26 of fibre matting or weave (often ceramic fibre), covered in an outer layer 22 of similar silicone rubber type material. The outer layer 22 may be integral with the inner layer 26.

In either the first or second previously-proposed systems, the silicone (or similar) material may be loaded with other fibres or powders to modify its fire resistance, fluid resistance, flexibility, strength etc. It is also possible to use intumescent paints that are applied as a continuous thin layer. Intumescent paints swell to a thicker layer during a fire, but they are not readily available in a robust, flexible form.

In the first system shown in Figure 1, a relatively thin layer 12 of silicone rubber type coating may resist flame impingement for some time, but it may not provide enough thermal insulation to maintain the component function for several minutes during a fire. Furthermore, if using a proprietary coating such as Fastblock®, an initial estimate of the layer thickness 18 required to maintain component function for several minutes gives a layer thickness of approximately 6.35mm (0.25 inches) all around a 1 mm thick component. However, the weight and stiffness of this thick layer considerably reduces the benefits of using a flexible component.

The second previously-proposed system may require a similar thickness 28, but the weight may be reduced by substituting some of the silicone rubber type material for lighter mineral-fibre matting or weave. However, this creates several problems. Firstly, if the protection system is not sealed then the mineral-fibre can soak up fluids adding weight, degrading the component, or creating a considerable fire hazard if the fluids are flammable. This also applies if the protection system is sealed but is susceptible to piercing, slitting etc. Secondly, if the system is sealed then the air contained within the mineral fibre causes the protection to inflate when transported to the relatively low atmospheric pressure of flight altitude. This can cause immediate (bursting) or long term (material degradation) damage. Equally, if the system is sealed then the air contained can also pressurise rapidly as it heats when exposed to fire and this pressure can then rupture the outer layer, resulting in much reduced fire protection.

Furthermore, the mineral-fibre layer of the second previously-proposed system can compress easily which allows the protection to crease and crumple when flexed, possibly resulting in reduced thermal insulation performance. The mineral-fibre may also degrade due to engine vibration, resulting in reduced thermal insulation performance.

The present disclosure therefore seeks to provide an improved heat protection assembly/system and/or to address some of the above issues at least.

According to an aspect, there is provided a component comprising a core element and a heat protection assembly. The heat protection assembly comprises an intumescent coil wrap. The intumescent coil wrap extends around the core element. The heat protection assembly has a coil-shaped gap interlaced with the intumescent coil wrap.

The component may be flexible during normal use. The core element may be flexible.

At least a part of (for example all of) the intumescent coil wrap and/or the coil-shaped gap may be continuous. Continuous may mean substantially continuous and/or may mean continuous over at least over a portion of the core element that requires protection from excessive heat.

There is also provided a method of manufacturing components in accordance with the present disclosure, for example by coiling an intumescent coil wrap around a flexible core element such that a coil-shaped gap is interlaced with the intumescent coil wrap.

According to an aspect, there is provided a method of heat protecting a core element, which may be a flexible core element. The method comprises providing an intumescent coil wrap extending around the core element. The method comprises arranging the intumescent coil wrap such that a coil-shaped gap is interlaced with the intumescent coil wrap. This may allow the flexibility of the heat protected flexible core element to be retained, at least during normal use.

There is also provided a heat protection assembly for a (flexible) core element. The heat protection assembly comprises an intumescent coil wrap. The intumescent coil wrap extends around the core element. The heat protection assembly has a coil-shaped gap interlaced with the intumescent coil wrap.

Arrangements and methods as disclosed herein in relation to the invention may, for example, allow the core element to be protected from excessive heat (for example during a fire), whilst retaining flexibility, at least during normal use. For example, providing a coil-shaped gap interlaced (or interwoven/intertwined) with the intumescent wrap may allow the heat protected component to flex during normal use, even if the intumescent wrap itself is substantially inflexible (or at least less flexible than the core element). Flexible may mean substantially flexible, for example having sufficient flexibility to be bent/shaped/positioned as desired.

The pitch and/or the width of the intumescent coil wrap may be chosen so as to create the coil-shaped gap. The pitch and/or the width of the intumescent coil wrap may additionally be chosen to ensure sufficient fire protection is provided by the intumescent coil if required.

The intumescent coil wrap may be referred to as an intumescent winding. The intumescent wrap may be said to be wrapped or coiled around or about the core element.

More than one intumescent coil wrap may extend around the core element. Thus, neighbouring coil portions along the heat protection assembly (i.e. parts of the intumescent coil wrap either side of a coil-shaped gap) may belong to different intumescent coil wraps, or to the same intumescent coil wrap.

The heat protection assembly may comprise an impermeable layer surrounding the core element. The intumescent coil wrap may be wrapped (or coiled) around the impermeable layer, which may be a flexible impermeable layer. Thus, a flexible impermeable layer may be provided between the intumescent coil wrap and the core element.

The method of heat protecting a flexible core element may comprise surrounding the flexible core element with a (flexible) impermeable layer. The method may comprise wrapping the intumescent coil wrap around the flexible impermeable layer.

Such an impermeable layer may provide protection to the core element. For example, the impermeable layer may provide a fluid barrier and thus fluid-tight protection.

Any suitable flexible material may be used for the impermeable layer, such as (by way of example only) an elastomer and/or a polymer, such as silicon rubber.

The component may be flexible in a normal operational state. Such a normal operational state may be referred to as a first state. The first state or normal operational state may be below an activation temperature of the intumescent material. Above the activation temperature, the intumescent material may expand (or swell) to provide a heat protective barrier over the core element. Above the activation temperature, the intumescent material of the coil wrap, and thus the flexible component, may be said to be at a second state. Above the activation temperature (i.e. in the second state), the flexible component may be less flexible than below the activation temperature, or indeed substantially rigid. The activation temperature may be reached, for example, as a result of exposure to a fire, or hot gas from a fire.

The intumescent material may be chosen to have an activation temperature to suit a particular application. For example, the activation temperature would typically be above the normal working temperature of the component, but sufficiently low to be activated as required, for example in the event of exposure to a fire or hot gas from a fire. Purely by way of example only, the activation temperature may be in the range of from 125 Celsius to 300 Celsius, for example 150 Celsius to 275 Celsius, for example 190 Celsius to 250 Celsius, for example on the order of 220 Celsius. However, it will be appreciated that intumescent materials with an activation temperature outside these ranges may be used in the invention.

The barrier formed by the intumescent wrap above the activation temperature may surround the component. For example, the barrier may surround the core element and, where present, the flexible impermeable layer. The coil-shaped gap may be filled in and/or covered over by the expanded intumescent wrap above the activation temperature.

An arrangement having a coil-shaped gap interlaced with an intumescent coil wrap may use less material (and thus be lighter and/or cheaper), whilst retaining adequate (for example equivalent) heat protection performance compared with an arrangement with no coil-shaped gap, i.e. compared with an arrangement having a continuous intumescent layer.

The heat protection assembly may comprise a protective layer, or coating, covering the intumescent coil wrap. The protective layer may be an outer layer. The protective layer may itself be in the shape of a coil, for example the shape of the protective layer may correspond to the shape of the intumescent coil wrap. The protective layer may comprise any suitable material, such as (by way of example only) an elastomer and/or a polymer, such as silicon rubber. Such a protective layer may provide environmental and/or abrasion protection to the intumescent material. Above the activation temperature, the protective layer, if present, may provide an ablative layer which may help to improve the heat resistance and/or fire protection of the heat protection assembly.

The heat protection assembly may further comprise a porous layer. Such a porous outer layer may be said to comprise voids. Such a porous layer may be a porous outer layer. Such a porous layer may be provided in addition to or instead of a protective layer (or not at all). If provided in addition to the protective layer, the porous layer may either be provided above or below (with respect to the core element) the protective layer.

In normal operation (i.e. below an activation temperature of the intumescent wrap), the porous layer may not retain fluid, thereby helping to prevent degradation of the intumescent material. Above the activation temperature, the intumescent coil may expand and impregnate the porous material, filling voids of the porous material. This may provide a particularly effective thermal barrier.

The porous layer may be referred to as a weave. The porous layer may comprise, for example, a carbon fibre weave or a polyetheretherketone weave, although any suitable material may be used.

The core element of the component may be any component that may require any degree of heat protection. The core element may be a component of a gas turbine engine. The core element may be an elongate element, that may have a central (or longitudinal) axis. For example, the core element may be an elongate element with a substantially constant cross section. In such an arrangement, the cross section may be any shape, such as circular, oblong, rectangular or any other shape. In the case of a circular cross section, for example, the intumescent coil wrap may be helical. By way of example, the core element may be any one or more of an electrical conductor (such as a wire, which may include insulation), a flexible printed circuit, a flexible fluid pipe, and a cable.

The intumescent coil wrap may be provided in the form of a tape. Providing the intumescent coil wrap as a tape may be particularly convenient, for example it may allow the intumescent coil wrap to be wrapped around the core element in an efficient manner.

The intumescent coil wrap may be provided with a backing material arranged to provide support to the intumescent material. The backing material may comprise a meta-aramid material, such as Nomex ™. Such backing may provide support for the intumescent material, during normal use and/or above the activation temperature.

The intumescent coil wrap may be constructed and arranged so as to expand to fill and/or cover the coil-shaped gap at or above an activation temperature of the intumescent material. This is one way of ensuring that a heat protection layer may be provided above the activation temperature.

The intumescent coil wrap may be free to move relative to the core element. For example, the intumescent coil wrap may be free to move axially relative to an elongate core element have a longitudinal axis. The width of the coil gap at a given position may be free to change.

Such an arrangement may be one way of improving the flexibility of the component. For example, the intumescent coil wrap may be free to move in a concertina manner.

The intumescent coil wrap may be wrapped around the core element loosely, such that it is free to move relative to the core element. Thus, for example, the intumescent coil wrap may be able to move relative to an impermeable layer that may surround the core element, if such an impermeable layer is present.

The impermeable layer (which may be flexible), where present, may comprise, or form, a coil rib formed on its outer surface. The coil rib may define grooves. The intumescent coil wrap may be located in grooves formed by the coil rib. Such an arrangement may be convenient for locating the intumescent coil wrap in the desired location.

Such a groove may have a base, and the intumescent coil wrap may be bonded to the base of the groove. Optionally, the intumescent coil wrap may additionally or alternatively be bonded to the sides of the groove. However, bonding the intumescent coil wrap only to the base of the groove may allow it to be conveniently fixed in the desired position, whilst retaining flexibility of the flexible component.

A flexible component according to the invention may be used in any apparatus as desired. According to an aspect of the invention, there is provided a gas turbine engine comprising a flexible component as described herein. Use in a gas turbine engine may be particularly beneficial, because of the dual requirements for many components of maintaining flexibility whilst being suitably protected from heat/fire.

For a better understanding of the present disclosure, reference will now be made, by way of non-limitative example only, to the accompanying drawings, in which:
Figure 1 shows a first previously-proposed fire protection system with Figure 1(a) showing a sectional view corresponding to section AA shown in Figure 1(b);
Figure 2 shows a second previously-proposed fire protection system with Figure 2(a) showing a sectional view corresponding to section AB shown in Figure 2(b);
Figure 3 shows an example of a component comprising a heat protection assembly according to an example of the invention;
Figure 4 shows a cross-section through line AE-AE of Figure 3;
Figure 5 shows the component of Figures 3 and 4 after the heat protection assembly has been exposed to a temperature above the activation temperature;
Figure 6 shows an example of a component comprising a heat protection assembly according to an example of the invention;
Figure 7 shows a cross-section through line AF-AF of Figure 6;
Figure 8 shows the component of Figures 6 and 7 after the heat protection assembly has been exposed to a temperature above the activation temperature;
Figure 9 shows an example of a component comprising a heat protection assembly according to an example of the invention;
Figure 10 shows a cross-section through line AG-AG of Figure 9;
Figure 11 shows the component of Figures 9 and 10 after the heat protection assembly has been exposed to a temperature above the activation temperature;
Figure 12 shows an example of a component comprising a heat protection assembly according to an example of the invention;
Figure 13 shows a cross-section through line AH-AH of Figure 12;
Figure 14 shows an example of a component comprising a heat protection assembly according to an example of the invention;
Figure 15 shows a cross-section through line AJ-AJ of Figure 14; and
Figure 16 shows the component of Figures 14 and 15 after the heat protection assembly has been exposed to a temperature above the activation temperature.

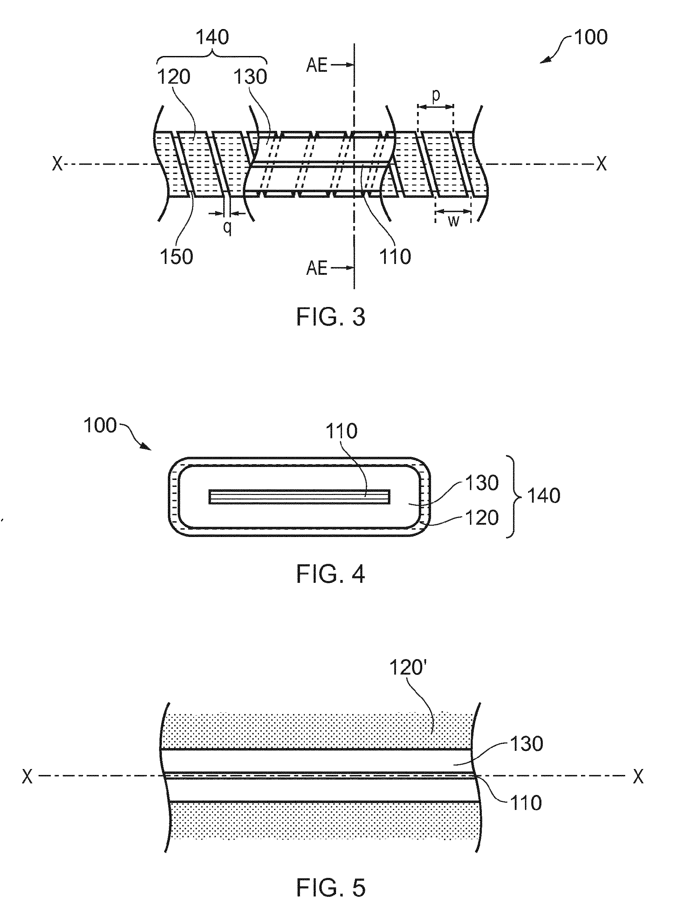

Figure 3 shows a flexible component 100 in accordance with an example of the invention. The middle portion of Figure 3 is cutaway to show a cross section through the component 100. Figure 4 shows a cross-section through the Figure 3 component in the AE-AE plane.

The component 100 shown in Figure 3 comprises a core element 110. As with all embodiments, the core element 110 may be any suitable component, for example a flexible component and/or a component that requires heat/fire protection. Examples of a core element include pipes, cables, wires and flexible printed circuits, as in the examples shown in the Figures.

The core element 110 is surrounded by a heat protection assembly 140. The heat protection assembly comprises a coil wrap 120. The coil wrap 120 is an intumescent coil wrap. The heat protection assembly may also comprise an impermeable layer 130 which may be flexible, as in the Figure 3 example. As shown in Figure 3, the flexible impermeable layer 130 (which may, for example, comprise silicon) may be positioned between the core element 110 and the coil wrap 120. The flexible impermeable layer 130 may provide protection to the core element 110 against fluid (for example liquid) ingress.

The coil wrap 120 may be formed in any suitable manner. For example, it may be preformed to match the cross-sectional profile of the combined core element 110 and flexible impermeable layer 130, or a length of intumescent material may be wrapped around the combined core element 110 and flexible impermeable layer 130 to create the coil wrap 120.

The coil wrap 120 is arranged (for example by having a suitable pitch p and/or width w) such that a coil-shaped gap 150 is formed. In the coil-shaped gap 150, the flexible impermeable layer 130 may be exposed, and thus may not be covered by the intumescent wrap material. This coil-shaped gap 150 may allow the component 100 to be flexible and/or improve the flexibility of the component 100. For example, even if the intumescent material of the coil wrap 120 is substantially rigid, or inflexible, (which may or may not be the case) the component 100 may retain flexibility as a result of the coil-shaped gap 150 formed by the arrangement of the coil wrap 120.

The core element 110 may be an elongate core element 110 with a longitudinal axis X-X, as in the examples shown in the Figures. The coil wrap 120 may fit loosely around the core element 110, or around the combined core element 120 and flexible impermeable layer 130 and core element 110, as in Figure 3. Thus, the coil wrap 120 may be free to move relative to the core element 110 and optionally the flexible impermeable layer 130, for example axially in the X-X direction. This may allow the coil-shaped gap 150 to change width q (or open and close) depending on the shape of the flexible component 100. The width q of the coil-shaped gap 150 may thus vary along the length of the component 100, for example as the component 100 is flexed. Indeed, the variable width q may allow the component 100 to flex, or at least improve its flexibility.

Purely by way of example only, the width w of the coil wrap 120 may be in the range of from 1 mm to 50 mm, for example 2 mm to 40 mm, for example 3 mm to 30 mm, for example 4 mm to 20 mm, for example 5mm to 10 mm, for example on the order of 6 mm. Of course, widths w greater than 50mm or less than 1 mm may be used, depending on the application.

Purely by way of example only, the width q of the coil-shaped gap 150 (when the component 100 is not flexed, for example) may be in the range of from 0.1 mm to 10 mm, for example 0.2 mm to 5 mm, for example 0.5 mm to 2 mm, for example on the order of 1 mm. Of course, widths q greater than 10 mm or less than 0.1 mm may be used, depending on the application.

As mentioned above, the coil wrap 120 may comprise an intumescent material. Such an intumescent material may (or may not) be provided with a backing material, such as a nomex ® based material. The backing material, if present, may help to provide support for the intumescent material in the event of a fire.

Any suitable intumescent material may be used. Purely by way of example, the intumescent material may comprise Technofire 2000 ® or Technofire 2006 ®. The thickness of the wrap material may depend on the application. For example, the thickness may be in the range of from 0.05 mm to 5 mm, for example 0.1 mm to 2 mm, for example 0.2 mm to 1 mm, for example on the order of 0.5 to 0.65 mm. Of course, the thickness may be greater than 5 mm or less than 0.05 mm, depending on the application.

In the event that the intumescent material is exposed to a temperature above its activation temperature (for example in the event of a fire, either through exposure to a flame or to hot gas produced from a fire), the intumescent material may expand. Figure 5 shows such an expanded, or swollen, intumescent layer 120'. The Figure 5 view is a similar cross-section through the component 100 to that shown in the middle portion of Figure 3.

The expanded intumescent layer 120' forms a heat-protection, thermal protection and/or fire-protection layer. The expanded intumescent layer 120' may surround the core element 110. The expanded intumescent layer 120' may also surround the flexible impermeable layer 130, where present, as shown in the Figure 5 example. The expanded intumescent layer 120' may have no axial spaces, or gaps. Thus, for example, during expansion the coil-shaped gap 150 may be closed. The expanded intumescent layer 120' may (or may not) reduce, or substantially remove, any flexibility of the original component 100. However, this may not be important after a fire, where the emphasis may be placed more on protecting the core component 110 than retaining flexibility.

Thus, above the activation temperature, the expanded intumescent layer 120' may thus form a thermal protection layer 120'. This thermal protection layer 120' may be complimented by the flexible impermeable layer 130, i.e. the flexible impermeable layer 130 may also provide thermal protection.

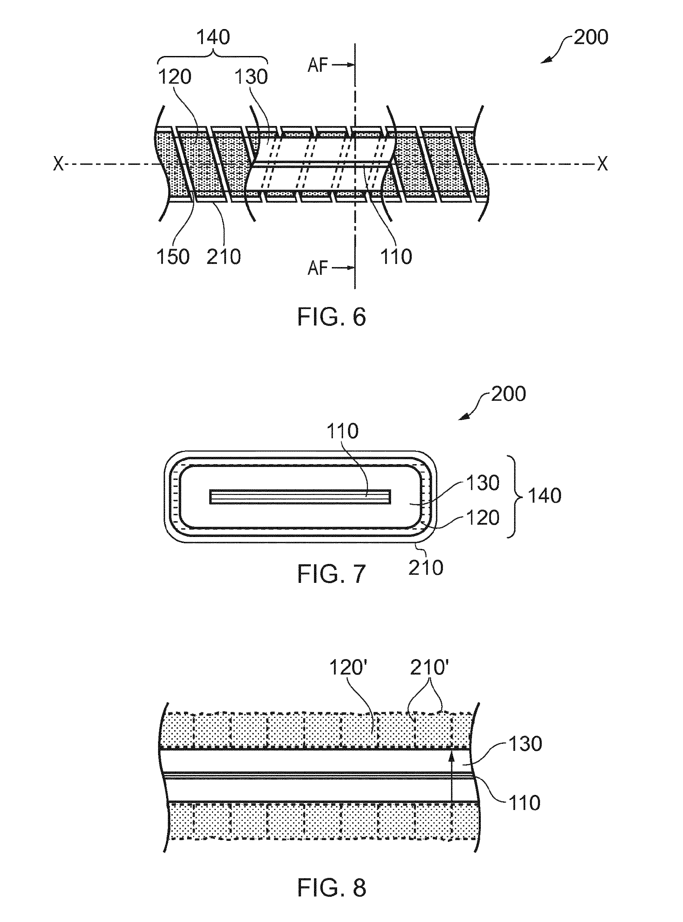

Various arrangements of components are provided according to the invention. Figures 6 to 8 relate to an example of one such flexible component 200. The flexible component 200 shares various features and/or properties with the flexible component 100 described above in relation to Figures 3 to 5, and like features are given the same reference numerals, and will not be described again in relation to Figures 6 to 8.

The flexible component 200 of Figures 6 and 7 comprises a protective layer 210 covering the intumescent coil wrap 120. The protective layer may provide environmental and/or abrasion protection to the intumescent wrap 120, for example. The protective layer 210 may comprise, for example, an elastomer, such as silicon and/or rubber. The protective layer 210 may take any form, for example the protective layer 210 may form a coil shape that corresponds to the intumescent coil wrap 120 that it protects. The protective layer 210 may or may not be considered to form part of the heat protection assembly 240.

Figure 8 shows the component 200 of Figures 6 and 7 after the intumescent coil wrap has been exposed to a temperature above the activation temperature. As with the other embodiments, the intumescent material has expanded in Figure 8 to form a thermal protection layer 120'. Additionally, the protective layer 210' may expand with the intumescent material to provide further thermal and/or mechanical and/or abrasion protection. The protective layer 210' may form an ablative layer after the component 200 is exposed to a temperature above the activation temperature. The protective layer 210 may be provided to any example of the invention including, by way of example, those shown in the Figures.

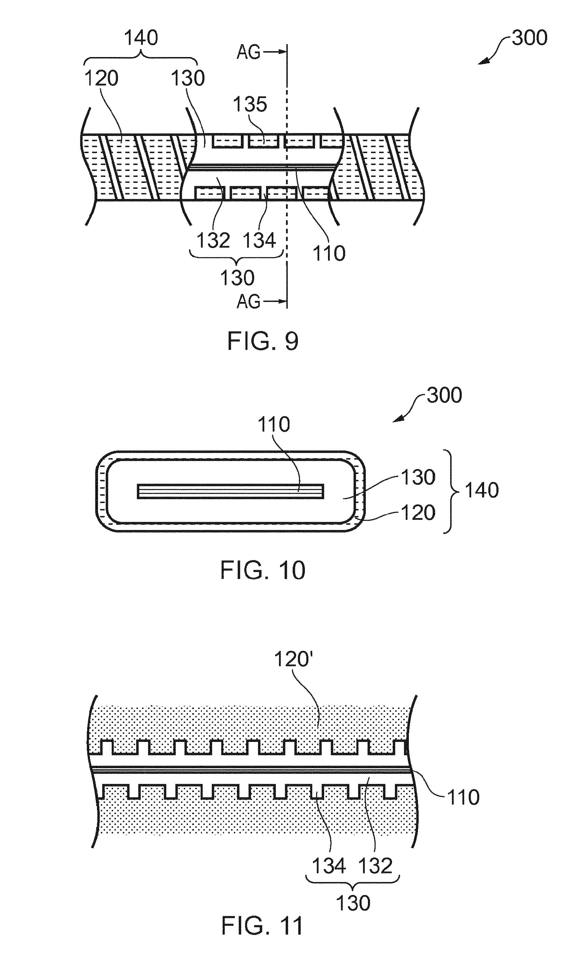

Figures 9 to 11 show a further example of a component 300 according to the invention. Again, the example of Figures 9 to 11 shares various features/properties of other embodiments, and like features are given the same reference numerals and will not be described again in relation to Figures 9 to 11.

The flexible component 300 of Figures 9 and 10 comprises a layer 130 that comprises one or more coil-shaped ribs 134. The layer 130 may be an impermeable layer, which may be flexible. The coil-shaped rib 134 extends from a spine 132 of the flexible impermeable layer 130. The intumescent coil wrap 120 sits in coil-shaped grooves formed by the coil-shaped rib 134. The coil-shaped grooves may thus be said to form a coil-shaped gap interlaced with the coil wrap 120. Optionally, the intumescent coil wrap 120 may be fixed, for example bonded, to the base 135 of the grooves. For example, the coil wrap 120 may be bonded to the base 135 of the grooves using a suitable adhesive, such as FastBlock 100 ® or any other suitable RTV adhesive.

Locating the intumescent coil wrap 120 in the grooves or troughs may help to ensure that the desired pitch/spacing of the wrap is achieved. Additionally, the rib(s) 134 may provide protection to the coil wrap 120, for example against abrasion.

The dimensions of the grooves, ribs 134, and intumescent coil 120 may be chosen to be as required for a particular application.

Figure 11 shows the component 300 after exposure at or above the activation temperature of the intumescent material. In a similar manner to that described above in relation to other examples, the intumescent material 120 has expanded to form a thermal protection layer 120'. The thermal protection layer 120' may form a continuous layer, as shown in the Figure 11 example. As with the other examples, the coil-shaped gaps interlaced with the intumescent coil 120 may be closed when the intumescent material expands at the activation temperature. Thus, the thermal protection layer 120' may cover the flexible impermeable layer 130, including the ribs 134. The thermal protection layer 120' may thereby provide thermal protection to the core element 110 at least.

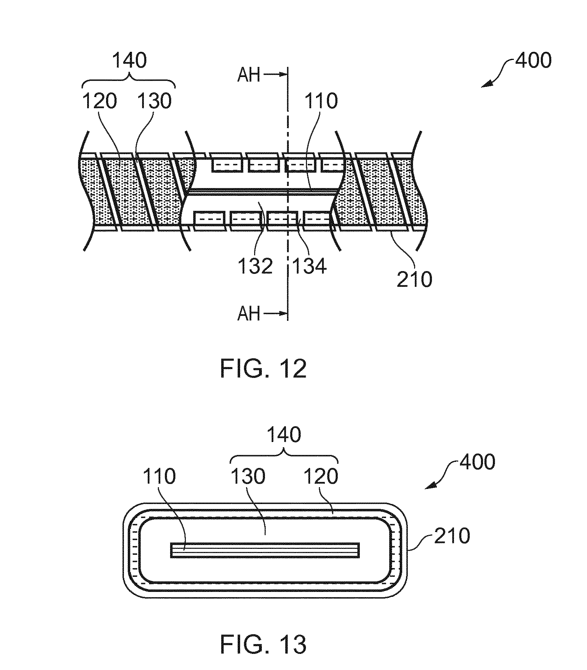

A protective layer 210 may be applied to a flexible component having ribs 134, as shown in the example of Figures 12 and 13. The protective layer 210 may take any suitable form, and may be as described above in relation to Figures 6, 7 and 8. For example, the protective layer 210 may be a continuous layer that surrounds the rest of the flexible component 400, or may be a coil shape the corresponds to, and sits on, the coil wrap 120, as shown in example of Figures 12 and 13. The description in relation to Figures 6, 7 and 8 applies to the example of Figures 12 and 13, and will not be repeated here.

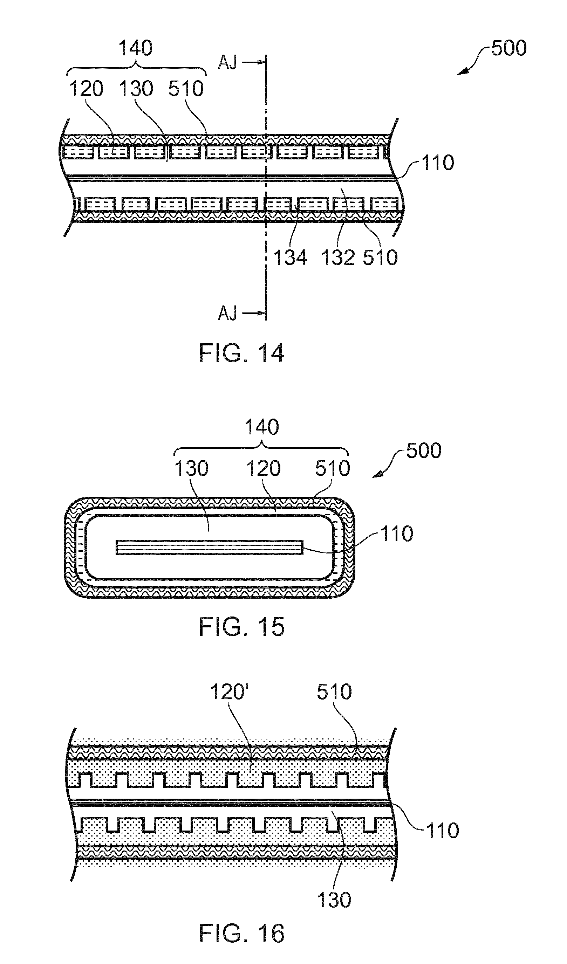

Figures 14 to 16 relate to an example in which the flexible component 500 is provided with porous layer 510. The porous layer 510 may be part of the heat protection assembly 140. A porous layer 510 may be applied to any arrangement of the invention. For example, a porous layer may be provided to an arrangement comprising a flexible impermeable layer which has ribs 134 (as in the example shown in Figure 14) or to an arrangement comprising a flexible impermeable layer which does not have ribs (for example a porous layer may be applied to the arrangements discussed in relation to Figures 3 to 8). A porous layer 510 may be provided in addition to, or instead of, a further protective layer 210, such as that discussed in relation to Figures 6-8, 12 and 13. In the example of Figures 14 to 16, the porous layer 510 is provided without an additional protective layer 210.

The porous layer may, for example, comprise polyetheretherketone (such as PEEK), and/or an organic composite fibre matrix, such as a carbon fibre weave. The porous layer 510 itself may be substantially flexible, and so may not limit the overall flexibility of the component 500. The porous layer 510 may be provided in any suitable manner, for example wrapped around other parts of the component 500 or provided as a "sock" that fits over other parts of the component 500. Because the layer 510 is porous, it may not retain liquid during normal operation.

If the intumescent material of the coil wrap 120 is exposed to a temperature above its activation temperature, it may swell, or expand, substantially as described above in relation to other examples and as shown in Figure 16. When the intumescent material expands, it may extend into, or fill, at least some of the voids in the porous layer, thereby impregnating the porous layer 510. This may enhance the fire protection provided to the core element 110.

Such a porous layer 510 may thus provide enhanced durability (e.g. abrasion resistance) during normal use (below the activation temperature) and/or in the event of exposure to excessive heat and/or may provide enhanced heat protection, for example in the event of a fire.

Aspects of the invention may be provided to and/or comprise any component that may require heat (for example fire) protection, for example any such component on an engine, such as a gas turbine engine. The present invention may be applied in technical fields such as (by way of example only) defence, aerospace, automotive, rail, marine, civil engineering, power generation, petrochemical, chemical, biological, manufacturing, nuclear or any other field which requires heat protection of a component.

Where the invention is applied to a gas turbine may typically have to withstand continuous operating temperatures between -65 and +150ºC and exposure to fluids such as Kerosene, Aviation Gasoline (AvGas), Natural Gas, hydraulic fluid, lubricating oils and greases etc. Components according to the present invention may be adapted to operate in such environments. For example the materials may be selected to withstand such an environment. Nevertheless, different materials may be selected to allow the assembly to operate in hotter or cooler environments or to withstand exposure to other chemicals encountered in different applications.

Various alternative and/or complimentary arrangements and/or components not explicitly described herein are in accordance with the invention. For example, although the description is provided mostly in relation to a flexible core element 110, the present invention may also be applied to non-flexible core elements, eg rigid core components, for example to provide a heat protection system with sufficient protection but reduced weight. Furthermore, any compatible feature or description provided herein in relation to one example may apply to and/or be provided to any other example.

## Claims

1. A flexible component (100) comprising:
a core element (110); and
a heat protection assembly (140) around the core element, wherein:
the heat protection assembly comprises an intumescent coil wrap (120) extending around the core element; and
a coil-shaped gap (150) is interlaced with the intumescent coil wrap.

2. A flexible component according to claim 1, wherein the heat protection assembly further comprises a flexible impermeable layer (130) surrounding the core element and around which the intumescent coil wrap is wrapped.

3. A flexible component according to claim 1 or claim 2, wherein:
the flexible component is flexible in a normal operational state below an activation temperature of the intumescent coil wrap; and
above the activation temperature, the intumescent coil wrap expands to provide a heat protective barrier (120') over the core element.

4. A flexible component according to any one of the preceding claims, further comprising a protective layer (210) covering the intumescent coil wrap.

5. A flexible component according to any one of the preceding claims, wherein the heat protection assembly further comprises a porous layer (510) comprising voids covering the intumescent wrap.

6. A flexible component according to claim 5 wherein the intumescent coil wrap is arranged to expand to fill the voids in the porous outer layer when it is exposed to an activation temperature.

7. A flexible component according to any one of the preceding claims, wherein the core element comprises at least one of an electrical conductor, a flexible printed circuit, a flexible fluid pipe, and a cable.

8. A flexible component according to any one of the preceding claims, wherein the intumescent coil wrap is provided in the form of a tape.

9. A flexible component according to any one of the preceding claims, wherein the intumescent coil wrap is constructed and arranged so as to expand to fill and/or cover the coil-shaped gap at an activation temperature.

10. A flexible component according to any one of the preceding claims, wherein the intumescent coil wrap is free to move relative to the core element such that the width of the coil-shaped gap at a given position is free to change.

11. A flexible component according to any one of claims 2 to 9, wherein:
the flexible impermeable layer comprises a coil rib (134) formed on its outer surface; and
the intumescent coil wrap is located in a groove formed by the coil rib.

12. A flexible component according to claim 11, wherein the groove has a base (135), and the intumescent coil wrap is bonded to the base of the groove.

13. A gas turbine engine comprising a flexible component according to any one of the preceding claims.

14. A method of heat protecting a flexible core element (110) comprising:
providing an intumescent coil wrap (120) extending around the core element;
and
arranging the intumescent coil wrap such that a coil-shaped gap (150) is interlaced with the intumescent coil wrap, thereby retaining the flexibility of the heat protected flexible core element.

15. A method of heat protecting a flexible core element according to claim 14, further comprising:
surrounding the flexible core element with a flexible impermeable layer (130);
and wrapping the intumescent coil wrap around the flexible impermeable layer.
